# EUROPÄISCHE PATENTSCHRIFT

(11) **EP 1 495 344 B1**
(45) Veröffentlichungstag und Bekanntmachung des Hinweises auf die Patenterteilung: **03.05.2006**
(21) Anmeldenummer: 03704538.2
(22) Anmeldetag: 05.02.2003
(51) Int. Cl.: G01S 13/93, B60Q 1/48

(54) **EINPARKHILFESYSTEM FÜR FAHRZEUGE UND VERFAHREN**
PARKING ASSISTANCE SYSTEM FOR VEHICLES AND CORRESPONDING METHOD
SYSTEME D'AIDE AU STATIONNEMENT POUR VEHICULES ET PROCEDE CORRESPONDANT

(30) Priorität: 13.04.2002 DE 10216346
(43) Veröffentlichungstag der Anmeldung: 12.01.2005
(73) Patentinhaber: Valeo Schalter und Sensoren GmbH, 74321 Bietigheim-Bissingen (DE)
(72) Erfinder: GOTZIG, Heinrich, 74081 Heilbronn (DE); HURTADO, Miguel, West Lafayette, IN 47906 (US); JECKER, Nicolas, 73728 Esslingen (DE); LILL, Anton, 74348 Lauffen (DE)
(74) Vertreter: Bulling, Alexander
(86) Internationale Anmeldenummer: PCT/EP2003/001111
(87) Internationale Veröffentlichungsnummer: WO 2003/087874

(56) Entgegenhaltungen:
- DE-A- 19 616 447
- DE-U- 20 105 340
- DE-U- 29 718 862
- FR-A- 2 728 972
- US-A- 3 898 655
- US-A- 4 931 930

## Beschreibung

Die Erfindung betrifft ein Verfahren zum Betreiben eines Einparkhilfesystems für ein Fahrzeug, mit wenigstens einem den seitlichen Nahbereich des Fahrzeuges wenigstens abschnittsweise erfassenden Abstandssensor und mit wenigstens einem den von dem Fahrzeug zurückgelegten Weg erfassenden Wegsensor, wobei ein Steuergerät aus den während des Vorbeifahrens an einer Parklücke erfassten Werten des Abstandssensors und des Wegsensors die Länge und/oder Breite der Parklücke bestimmt. Die Erfindung betrifft ferner ein Einparkhilfesystem und ein Fahrzeug.

Aus der DE 297 18 862 Ul sind derartige Einparkhilfesysteme bekannt geworden. Es hat sich gezeigt, dass die gemessene Größe der Parklücke von der tatsächlichen Größe der Parklücke abweicht.

Aus der FR 2 728 972 A1 ist ein Verfahren zur Bestimmung der Länge einer Parklücke bekannt geworden, bei dem eine Korrektur der gemessenen Werte erfolgt.

Der vorliegenden Erfindung liegt die Aufgabe zugrunde, ein Verfahren der eingangs genannten Art derart fortzubilden, dass die Größe der Parklücke beim Vorbeifahren an der Parklücke möglichst genau bestimmt wird.

Diese Aufgabe wird mit einem Verfahren mit den Merkmalen des Patentanspruchs 1 gelöst. Erfindungsgemäß ist vorgesehen, dass je nach Geschwindigkeit des Fahrzeuges während des Vorbeifahrens an der Parklücke die Messung mittels des Abstandssensors in unterschiedlichen Zeitintervallen erfolgt. Zur möglichst genauen Bestimmung der Größe der Parklücke wird beispielsweise bei langsamen Geschwindigkeiten in relativ kurzen Zeitintervallen gemessen. Um einen ersten Eindruck von der Größe der Parklücke zu erhalten, kann bei raschem Vorbeifahren an der Parklücke die Messung in relativ großen Zeitintervallen erfolgen. Hierdurch wird insbesondere Rechenleistung gespart, die dann für andere Fahrzeugsysteme zur Verfügung steht.

Vorteilhafterweise hängt der Korrekturwert bei nicht zylindrischen Abstrahlkeulen von dem seitlichen Abstand des Fahrzeuges zu den die Parklücke begrenzenden Objekten ab. Je nach seitlichem Abstand zu den Objekten wird also ein unterschiedlicher Korrekturwert verwendet.

Erfindungsgemäß kann zudem vorgesehen sein, dass je nach seitlichem Abstand des Fahrzeuges zu den die Parklücke begrenzenden Objekten, beispielsweise zwei parkende Fahrzeuge, die nach bekannter Art und Weise bestimmte Länge und/oder Breite der Parklücke um einen Korrekturwert korrigiert wird. Es hat sich nämlich gezeigt, dass aufgrund der nicht linienartigen Geometrie der Abstrahlkeule des Abstandssensors nicht die tatsächliche Länge der Parklücke bestimmt wird, sondern eine Länge vom Zeitpunkt des Austretens des einen parkenden Fahrzeugs aus der Keule bis zum Zeitpunkt des Eintretens des anderen parkenden Fahrzeugs in die Keule des Abstandssensors. Der halbe Durchmesser der Keule verfälscht also zum einen beim Austreten und zum anderen beim Eintreten der eines Objekts aus der bzw. in die Keule das Messergebnis. Ferner werden bei nicht zylindrischen Keulen bei verschiedenen seitlichen Abständen zu den die Parklücke begrenzenden Objekten für ein und dieselbe Parklücke unterschiedliche Längen gemessen. Durch Korrigieren der gemessenen Länge der Parklücke mit einem Korrekturwert wird erfindungsgemäß die sich aus der abstandssensorspezifischen Abstrahlkeule ergebende Ungenauigkeit vorteilhafterweise vollständig eliminiert.

Eine vorteilhafte Ausgestaltung der Erfindung sieht vor, dass der Korrekturwert abhängig von der Geometrie der Keule des Abstandssensors ist. Bei bekannter Geometrie der Keule des Abstandssensors kann der Korrekturwert in Abhängigkeit von dem Abstand des jeweils erfassten Objekts auf einfache Art und Weise bestimmt werden.

Vorteilhafterweise ist erfindungsgemäß vorgesehen, dass der Korrekturwert linear abhängig von dem radialen Abstand der Hauptabstrahlrichtung bzw. der Längsachse der Keule zur Oberfläche der Keule in der Ebene des Austretens bzw. Eintretens eines der die Parklücke begrenzenden Objekts aus der bzw. in die Keule ist. Vorteilhafterweise entspricht der Korrekturwert des radialen Abstands von der Hauptabstrahlrichtung zu dem Punkt, in dem das jeweilige Objekt aus der Keule austritt bzw. in die Keule eintritt.

Eine vorteilhafte Ausführungsform der Erfindung ergibt sich dann, wenn der Korrekturwert in verschiedenen Abstandsabschnitten zu den die Parklücke begrenzenden Objekten verschiedene Festwerte aufweist. Dies hat den Vorteil, dass aufgrund des Vorsehens der Festwerte Rechenleistung eingespart werden kann.

Dabei ist denkbar, dass ein erster Abstandsabschnitt den Bereich von 0 bis 1 m Abstand zu den die Parklücke begrenzenden Objekten beträgt. Der als Festwert vorgesehene Korrekturwert kann hierbei beispielsweise 0,5 m betragen.

Ein weiterer Abstandsabschnitt kann beispielsweise den Abstandsbereich zwischen 1 m und 1,2 m Abstand zwischen dem Fahrzeug und den die Parklücke begrenzenden Objekten umfassen. Ein fester Korrekturwert kann hierbei 0,2 m sein.

Ferner ist erfindungsgemäß denkbar, dass der Korrekturwert 0 beträgt, wenn der Abstandsbereich bzw. der seitliche Abstand des Fahrzeuges zu den die Parklücke begrenzenden Objekten mehr als 1,2 m ist.

Ein vorteilhaftes Zeitintervall der Messung des Abstandssensors ergibt sich dann, wenn die Messung mittels des Abstandsensors bei einer Geschwindigkeit des Fahrzeuges von mehr als 19 km/h in Zeitintervallen von 20 ms erfolgt. Ist die Geschwindigkeit des Fahrzeugs im Bereich zwischen 10 km/h und 19 km/h, so erfolgt die Messung mittels des Abstandssensors vorteilhafterweise in Zeitintervallen von 40 ms. Beträgt die Fahrzeuggeschwindigkeit weniger als 10 km/h, erfolgt die Messung vorteilhafterweise alle 100 ms. Dadurch wird erreicht, dass bei langsamen Fahrzeuggeschwindigkeiten, d.h. bei ernsthaften Absichten, in eine Parklücke einzuparken, eine sehr genaue Messung erfolgt.

Als Abstandssensor kann beispielsweise ein Ultraschallsensor, Infrarotsensor, Radarsensor oder ein optischer Sensor Verwendung finden. Der Wegsensor kann den zurückgelegten Weg mittels ABS-Signalen, Getriebesignalen, Tachometersignalen od.dgl. bestimmen. Er kann ferner Teil eines ABS-Systems, Getriebesystems, Tachometersystems od.dgl. sein. Dies hat den Vorteil, dass bereits im Fahrzeug vorhandene Komponenten als Wegsensor Verwendung finden können.

Um dem Fahrzeuglenker mitzuteilen, ob die Parklücke, an der das Fahrzeug vorbeigefahren ist, für das Fahrzeug groß genug ist, sind Mittel zur quantitativen und/oder qualitativen Mitteilung vorgesehen. Derartige Mittel können Displaysysteme oder Lautsprechersysteme sein.

Bei einer weiteren, vorteilhaften Ausführungsform der Erfindung ist vorgesehen, dass der Abstandssensor in verschiedenen Modi, insbesondere als Sensor für ein erfindungsgemäßes Einparkhilfesystem und für ein Einparkhilfesystem zur Vermeidung von Kollisionen während des Einparkvorgangs, betreibbar ist. Dies hat den Vorteil, dass für verschiedene Funktionen ein und derselbe Sensor Verwendung finden kann.

Die eingangs genannte Aufgabe wird ferner durch Einparkhilfesystem zur Durchführung des erfindungsgemäßen Verfahrens gelöst. Auch ein Fahrzeug, das ein solches System aufweist, löst die eingangs genannte Aufgabe.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: ein Fahrzeug mit einem erfindungsgemäßen Einparkhilfesystem vor dem Passieren einer Parklücke;
- Fig. 2:: ein Fahrzeug mit einem erfindungsgemäßen Einparkhilfesystem;
- Fig. 3:: den Frontabschnitt des Fahrzeugs gemäß Fig. 2 beim Passieren einer Parklücke;
- Fig. 4:: ein Ablaufdiagramm eines erfindungsgemäßen Einparkhilfesystems; und
- Fig. 5a und 5b:: ein Fahrzeug, bei dem das erfindungsgemäße Einparkhilfesystem in zwei verschiedenen Modi betrieben wird.

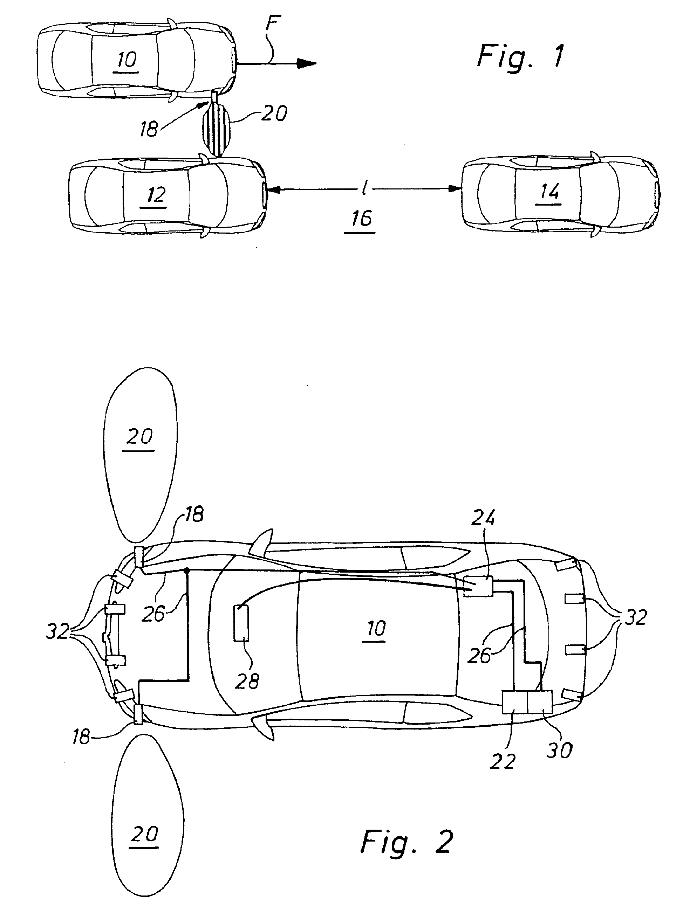

Fig. 1 zeigt ein sich in Fahrtrichtung F bewegendes Fahrzeug 10, das ein parkendes Fahrzeug 12 passiert. Zwischen einem weiteren Fahrzeug 14 und dem Fahrzeug 12 ist eine Parklücke 16 vorhanden. Die Parklücke 16 weist die tatsächliche Länge 1 auf. Das Fahrzeug 10, das in Fig. 2 vergrößert dargestellt ist, sieht an seinen Fahrzeuglängsseiten jeweils einen Abstandssensor 18 vor. Der Abstandssensor 18 erfasst den seitlichen Nahbereich des Fahrzeuges. Die von den Sensoren 18 erfassten Bereiche, sogenannte Keulen, sind in den Figuren mit den Bezugszeichen 20 gekennzeichnet.

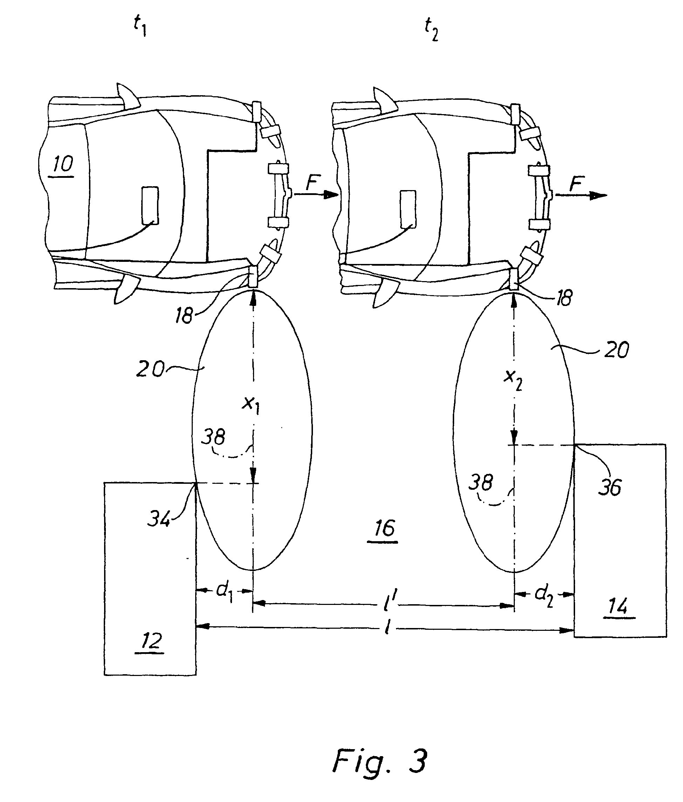

Das Fahrzeug 10 sieht ferner einen Wegsensor 22 vor, der beispielsweise mit dem ABS-System, dem Getriebe oder dem Tachometer des Fahrzeuges 10 gekoppelt ist. Das Fahrzeug 10 umfasst weiterhin ein Steuergerät 24, das über Leitungen 26 mit den Abstandssensoren 18 und dem Wegsensor 22 gekoppelt ist. Aus den von den Abstandssensoren 18 und dem Wegsensor 22 gemessenen Werten kann das Steuergerät 24 die Länge 1 der Parklücke 16 bestimmen (vgl. Beschreibung Fig. 3). Das Fahrzeug 10 sieht ferner ein mit dem Steuergerät 24 verbundenes Display 28 vor, das dem Fahrzeuglenker über die Größe der Parklücke 16 nach dem Passieren der Parklücke 16 Auskunft gibt.

Neben dem Wegsensor 22 sieht das Fahrzeug 10 ferner einen ebenfalls mit dem Steuergerät 24 gekoppelten Geschwindigkeitssensor 30 vor. Außerdem sind weitere Abstandssensoren 32 im Front- und Heckbereich des Fahrzeuges vorgesehen, die Teil eines Einparkhilfesystems sind und den Fahrzeuglenker bei Unterschreiten von Sicherheitsabständen zu in dem Nahbereich des Fahrzeuges vorhandenen Objekten vor Kollisionen warnen.

Fig. 3 erläutert das erfindungsgemäße Einparkhilfesystem. Dazu ist das Fahrzeug 10 in zwei zeitlich nacheinander liegenden Positionen t₁ und t₂ gezeigt. Hierbei sind die beiden die Parklücke begrenzenden Objekte 12 und 14 nicht entlang einer Linie, sondern leicht versetzt zueinander angeordnet. Das Objekt 14 ist einem vorbeifahrenden Fahrzeug folglich näher als das Objekt 12.

Vor dem Zeitpunkt t₁ wird über den Abstandssensor 18 der seitliche Abstand x₁ zu dem parkenden Fahrzeug 12 gemessen. Im Zeitpunkt t₁ verlässt der Eckbereich 34 des Fahrzeugs 12 die Keule 20 des Abstandssensors 18. Der Abstandssensor 18 teilt folglich dem Steuergerät 24 mit, dass zum Zeitpunkt t₁ die Parklücke 16 beginnt. In diesem Zeitpunkt t₁ beginnt der Wegsensor 22 den bis zum Zeitpunkt t₂ zurückgelegten Weg zu messen, wobei im Zeitpunkt t₂ der Eckbereich 36 des Fahrzeugs 14 in die Keule 20 des Abstandssensors 18 eintritt. Das Steuergerät 24 erhält folglich die Mitteilung, dass das Ende der Parklücke 16 erreicht ist. Über den zwischen den beiden Zeitpunkten t₁ und t₂ zurückgelegten Weg wird die Länge 1' als Länge der Parklücke 16 gemessen.

Wie der Fig. 3 leicht entnommen werden kann, entspricht diese Länge l' nicht der tatsächlichen Länge 1 der Parklücke 16.

Um von der Länge l' auf die tatsächliche Länge 1 der Parklücke 16 zu gelangen, wird erfindungsgemäß zu dem Wert l' ein Korrekturwert k hinzugefügt. Nach dem Ausführungsbeispiel gemäß Fig. 3 beträgt der Korrekturwert k = d₁ + d₂. Die Länge 1 der Parklücke 16 berechnet sich also wie folgt: 1 = 1' + (d₁ + d₂).

Die Werte d₁ und d₂ können beispielsweise wie folgt bestimmt werden: Der Abstand x₁ des vorbeifahrenden Fahrzeuges 10 zu dem Fahrzeug 12 wird bestimmt. Ferner ist die Geometrie der Keulenoberfläche der Keule 20 bekannt. Aus x₁ kann folglich der Abstand d₁ bestimmt werden, der dem radialen Abstand von der Hauptabstrahlrichtung 38 zu dem Eckbereich 34 des Fahrzeugs 12 entspricht. Entsprechendes gilt für den Abstand d₂. Im Zeitpunkt t₂ ist d₂ gleich dem radialen Abstand von der Hauptabstrahlrichtung 38 zu dem Eckbereich 36 des Fahrzeugs 14.

Dadurch, dass die Fahrzeuge 12 und 14 versetzt zueinander geparkt sind, ist d₁ von d₂ verschieden. Liegen hingegen die Fahrzeuge 12 und 14 in einer Ebene, so entspricht der Wert d₁ dem Wert d₂.

Die Werte d₁ und d₂ können auch geschätzt werden oder es kann erfindungsgemäß vorgesehen sein, dass der seitliche Abstand zwischen den Fahrzeugen 10 und den die Parklücke begrenzenden Fahrzeugen 12 und 14 in insbesondere drei Abstandsabschnitte eingeteilt wird. Ein erster Abstandsabschnitt erstreckt sich von 0 bis 1 m Abstand. Ein zweiter Abstandsabschnitt erstreckt sich von 1 m bis 1,2 m Abstand. Ein dritter Abstandsabschnitt umfasst Abstände, die mehr als 1,2 m betragen. Sind die Fahrzeuge 12 und 14 in dem ersten Abstandsabschnitt, so kann ein pauschaler Korrekturwert von ca. 0,5 m vorgesehen werden, der die beiden Werte d₁ und d₂ beinhaltet. Beträgt der seitliche Abstand zwischen dem Fahrzeug 10 und den Fahrzeugen 12 und 14 einen Wert zwischen 1 m und 1,2 m, so kann ein pauschaler Korrekturwert von 0,2 m vorgesehen werden. Ist der entsprechende Abstand mehr als 1,2 m, so kann ein Korrekturwert von 0 vorgesehen werden.

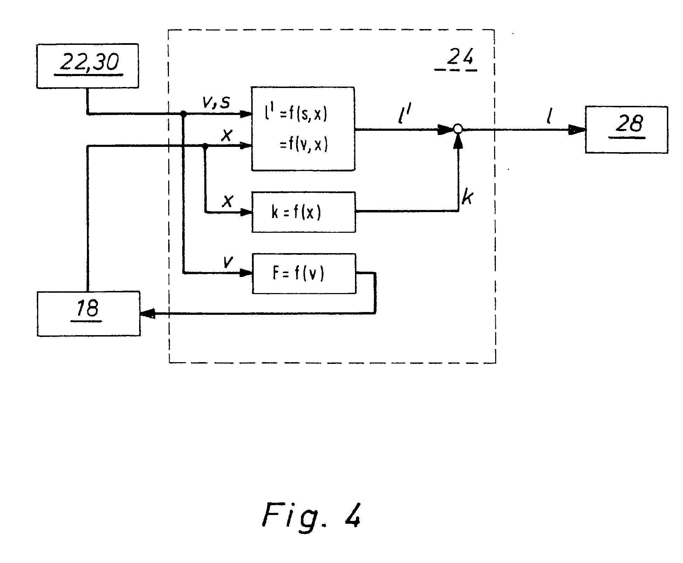

In der Fig. 4 ist das erfindungsgemäße Verfahren zum Betreiben des Einparkhilfesystems schematisch dargestellt. Der Abstandssensor 18 misst den seitlichen Abstand von dem Fahrzeug 10 zu in der Keule 20 vorhandenen Objekten 12, 14. Dieser Wert x wird dem Steuergerät 24 mitgeteilt. Ist x entsprechend groß, d.h. es wird eine Parklücke entdeckt, so wird über den Wegsensor 22 bzw. über den Geschwindigkeitssensor 30 der Weg bzw. die Geschwindigkeit des Fahrzeuges gemessen, bis ein Objekt 14 von dem Abstandssensor 18 erkannt wird. Aus der Messung ergibt sich die Länge 1' der Parklücke. 1' ist dabei eine Funktion des zurückgelegten Weges s und des erfassten Abstandes x, bzw. ist eine Funktion der zurückgelegten Geschwindigkeit und des erfassten Abstandes x, d.h.: l' = f(s, x) bzw. l' = f(v, x). Um die tatsächliche Länge 1 der Parklücke zu erhalten, wird der Wert l' mit einem Korrekturwert k korrigiert. Der Korrekturwert k ist hierbei eine Funktion des Abstandes x von den die Parklücke 16 begrenzenden Objekten 12, 14, d.h.: k = f(x). Die tatsächliche Länge 1 der Parklücke berechnet sich also wie folgt: 1 = 1' + k. Diese Länge 1 wird mittels des Displays 28 dem Fahrzeuglenker qualitativ oder quantitativ angezeigt.

Um eine genaue Vermessung der Parklücke 16 zu gewährleisten, wird je nach Geschwindigkeit v des Fahrzeuges 10 während des Vorbeifahrens an der Parklücke 16 die Messung mittels des Abstandssensors 18 in unterschiedlichen Zeitintervallen vorgenommen. Die Messfrequenz f ist folglich eine Funktion der Geschwindigkeit v des Fahrzeuges 10, d.h.: *f* = f (v). Beträgt die Fahrzeuggeschwindigkeit mehr als 19 km/h, so kann die Messung beispielsweise alle 20 ms erfolgen. Beträgt die Fahrzeuggeschwindigkeit einen Wert zwischen 10 km/h und 19 km/h, so bietet es sich an, Zeitintervalle von 40 ms vorzusehen. Als besonders vorteilhaft hat sich ergeben, Zeitintervalle von 100 ms für die Messung des Abstandssensors 18 vorzunehmen, wenn die Fahrzeuggeschwindigkeit weniger als 10 km/h beträgt.

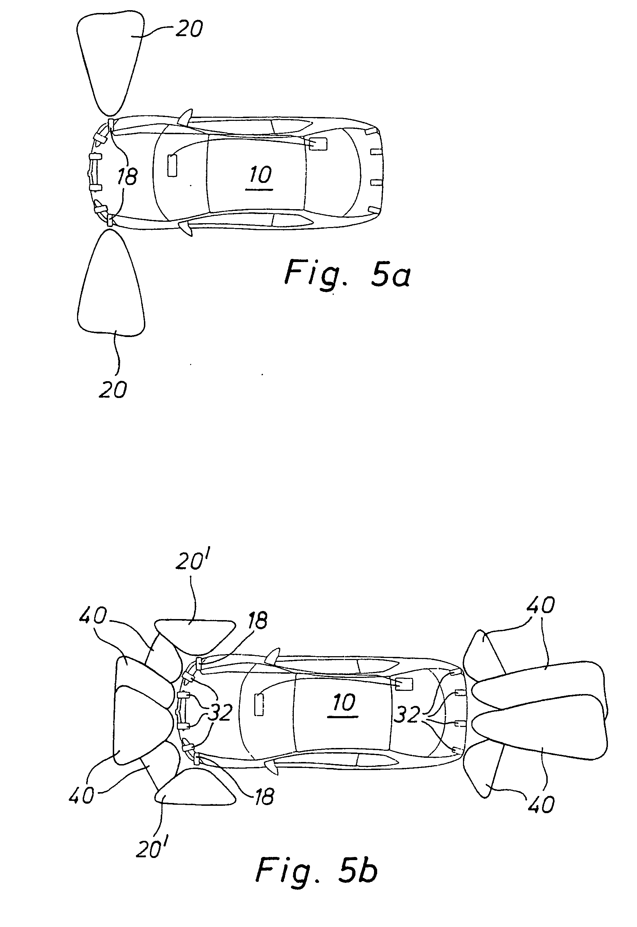

Fig. 5 a zeigt das Fahrzeug 10, bei dem die Abstandssensoren 18 Teil eines erfindungsgemäßen Einparkhilfesystems zur Bestimmung der Größe einer Parklücke sind. Die Abstandssensoren 18 können allerdings ebenfalls Teil eines Einparkhilfesystems zur Vermeidung von Kollisionen während des Einparkvorgangs, wie in Fig. 5b dargestellt, sein. Die Abstandssensoren 18 werden hierbei in einem anderen Modus, bzw. das Steuergerät 24 wird mittels einer anderen, entsprechenden Software betrieben und erfassen den Nahbereich 20'. Die Abstandssensoren 32 erfassen die Bereiche 40. Dies hat den Vorteil, dass die Abstandssensoren 18 für verschiedene Aufgaben Verwendung finden können, ohne dass zusätzliche Bauteile bereitzustellen sind.

Vorteilhaft ist ein ständig zwischen den beiden Modi hin und her wechselndes Betreiben der Sensoren 18. Die Wechselfrequenz kann hierbei relativ hoch sein, so dass zum einen Ausschau nach einer geeigneten Parklücke gehalten wird und zum anderen eine Kollision mit einem in den Nahbereich gelangenden Objekt verhindert wird.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verfahren zum Betreiben eines Einparkhilfesystems für ein Fahrzeug (10), mit wenigstens einem den seitlichen Nahbereich des Fahrzeuges wenigstens abschnittsweise erfassenden Abstandssensor (18) und mit wenigstens einem den von dem Fahrzeug zurückgelegten Weg erfassenden Wegsensor (22), wobei aus den während des Vorbeifahrens an einer Parklücke (16) gemessenen Werten der Sensoren (18, 20) die Länge und/oder Breite der Parklücke (16) bestimmt wird, **dadurch gekennzeichnet, dass** je nach Geschwindigkeit (v) des Fahrzeuges (10) während des Vorbeifahrens an der Parklücke (16) die Messung mittels des Abstandssensors (18) in unterschiedlichen Zeitintervallen erfolgt.

2. Verfahren nach Anspruch 1, **dadurch gekennzeichnet, dass** die gemessene Länge und/oder Breite der Parklücke (16) um einen Korrekturwert (k) korrigiert wird.

3. Verfahren nach Anspruch 2, **dadurch gekennzeichnet, dass** der Korrekturwert (k), insbesondere bei nicht zylindrischen Abstrahlkeulen, abhängt von dem seitlichen Abstand des Fahrzeuges (10) zu den die Parklücke (16) begrenzenden Objekten (12, 14).

4. Verfahren nach Anspruch 2 oder 3, **dadurch gekennzeichnet, dass** der Korrekturwert (k) abhängt von der Geometrie der Keule (20) des Abstandssensors (18).

5. Verfahren nach Anspruch 2, 3 oder 4, **dadurch gekennzeichnet, dass** der Korrekturwert (k) linear abhängig ist vom radialen Abstand (d₁, d₂) der Hauptabstrahlrichtung (38) zur Oberfläche der Keule (20) im Punkt des Austretens bzw. Eintretens (t₁, t₂) eines die Parklücke (16) begrenzenden Objekts (12, 14) aus der bzw. in die Keule (20) des Abstandssensors (18).

6. Verfahren nach einem der Ansprüche 2 bis 5, **dadurch gekennzeichnet, dass** der Korrekturwert (k) in verschiedenen Abstandsabschnitten zu den die Parklücke (16) begrenzenden Objekten (12) 14) verschiedene Festwerte aufweist.

7. Verfahren nach einem der Ansprüche 2 bis 6, **dadurch gekennzeichnet, dass** der Korrekturwert (k) 0,5 m beträgt, wenn der seitliche Abstand des Fahrzeuges (10) zu den die Parklücke (16) begrenzenden Objekten (12, 14) weniger als 1 m ist.

8. Verfahren nach einem der Ansprüche 2 bis 7, **dadurch gekennzeichnet, dass** der Korrekturwert (k) 0,2 m beträgt, wenn der seitliche Abstand des Fahrzeuges (10) zu den die Parklücke (16) begrenzenden Objekten (12, 14) zwischen 1 m und 1,2 m ist.

9. Verfahren nach einem der Ansprüche 2 bis 8, **dadurch gekennzeichnet, dass** der Korrekturwert (k) Null beträgt, wenn der seitliche Abstand des Fahrzeuges (10) zu den die Parklücke (16) begrenzenden Objekten (12,14) mehr als 1,2 m ist.

10. Verfahren nach einem der vorhergehenden Ansprüche, **dadurch gekennzeichnet, dass** die Messung mittels des Abstandssensors (18) bei einer Geschwindigkeit (v) des Fahrzeuges (10) von mehr als 19 km/h in Zeitintervallen von 20 ms erfolgt.

11. Verfahren nach einem der vorhergehenden Ansprüche, **dadurch gekennzeichnet, dass** die Messung mittels des Abstandssensors (18) bei einer Geschwindigkeit (v) des Fahrzeuges (10) zwischen 10 km/h und 19 km/h in Zeitintervallen von 40 ms erfolgt.

12. Verfahren nach einem der vorhergehenden Ansprüche, **dadurch gekennzeichnet, dass** die Messung mittels des Abstandssensors (18) bei einer Geschwindigkeit (v) des Fahrzeuges (10) von weniger als 10 km/h in Zeitintervallen von 100 ms erfolgt.

13. Verfahren nach einem der vorhergehenden Ansprüche, **dadurch gekennzeichnet, dass** der Abstandssensor (18) ein Ultraschallsensor, Infrarotsensor, Radarsensor, optischer Sensor od.dgl. ist.

14. Verfahren nach einem der vorhergehenden Ansprüche, **dadurch gekennzeichnet, dass** der Wegsensor (22) als Eingangsgröße ABS-Signale, Getriebesignale, Tachometersignale od.dgl. erhält oder Teil eines ABS-Systems, Getriebesystems, Tachometersystems od.dgl. ist.

15. Verfahren nach einem der vorhergehenden Ansprüche, **dadurch gekennzeichnet, dass** Mittel (28) zur quantitativen oder qualitativen Mitteilung an den Fahrzeuglenker, ob ein Einparken mit dem Fahrzeug (10) in die Parklücke (16) möglich ist, vorgesehen sind.

16. Verfahren nach einem der vorhergehenden Ansprüche, **dadurch gekennzeichnet, dass** der Abstandssensor (18) in verschiedenen Modi, insbesondere als Sensor für ein Einparkhilfesystem nach einem der vorhergehenden Ansprüche und für ein Einparkhilfesystem zur Vermeidung von Kollisionen während des Einparkvorgangs, betreibbar ist.

17. Einparkhilfesystem zur Durchführung des Verfahrens nach wenigstens einem der vorhergehenden Ansprüche.

18. Fahrzeug (10) mit einem System nach dem vorhergehenden Anspruch.

## Claims

1. Method for operating a parking assistance system for a vehicle (10) with at least one distance sensor (18) which detects at least portions of the lateral proximity of the vehicle and at least one path sensor (22) which detects the path travelled by the vehicle, wherein the length and/or width of the parking space (16) is determined from the values of the sensors (18, 20) measured during passage by the parking space (16), **characterized in that** the measurement is carried out by the distance sensor (18) at different time intervals in dependence on the speed (v) of the vehicle (10) while passing by the parking space (16).

2. Method according to claim 1, **characterized in that** the measured length and/or width of the parking space (16) is corrected by a correction value (k).

3. Method according to claim 2, **characterized in that** the correction value (k), in particular for non-cylindrical radiation lobes, depends on the lateral distance between the vehicle (10) and the objects (12, 14) delimiting the parking space (16).

4. Method according to claim 2 or 3, **characterized in that** the correction value (k) depends on the geometry of the lobe (20) of the distance sensor (18).

5. Method according to claim 2, 3 or 4, **characterized in that** the correction value (k) depends linearly on the radial distance (d₁, d₂) between the main radiation direction (38) and the surface of the lobe (20) at the point of exit or entry (t₁, t₂) of an object (12, 14) delimiting the parking space (16) from or into the lobe (20) of the distance sensor (18).

6. Method according to any one of the claims 2 to 5, **characterized in that** the correction value (k) has different fixed values in different distance ranges from the objects (12, 14) delimiting the parking space (16).

7. Method according to any one of the claims 2 to 6, **characterized in that** the correction value (k) is 0.5m when the lateral distance between the vehicle (10) and the objects (12,14) delimiting the parking space (16) is less than 1 m.

8. Method according to any one of the claims 2 to 7, **characterized in that** the correction value (k) is 0,2 m, when the lateral distance between the vehicle (10) and the objects (12, 14) delimiting the parking space (16) is between 1 m and 1,2 m.

9. Method according to any one of the claims 2 to 8, **characterized in that** the correction value (k) is zero when the lateral distance between the vehicle (10) and the objects (12, 14) delimiting the parking space (16) is more than 1,2 m.

10. Method according to any one of the preceding claims, **characterized in that** the measurement is carried out by the distance sensor (18) at time intervals of 20 ms when the vehicle (10) speed (v) is more than 19 km/h.

11. Method according to any one of the preceding claims, **characterized in that** the measurement by the distance sensor (18) is carried out at time intervals of 40 ms when the vehicle (10) speed (v) is between 10 km/h and 19 km/h.

12. Method according to any one of the preceding claims, **characterized in that** the measurement is carried out by the distance sensor (18) at time intervals of 100 ms when the vehicle (10) speed (v) is less than 10 km/h.

13. Method according to any one of the preceding claims, **characterized in that** the distance sensor (18) is an ultrasonic sensor, infrared sensor, radar sensor, optical sensor or the like.

14. Method according to any one of the preceding claims, **characterized in that** the path sensor (22) receives, as input values, ABS signals, transmission signals, speedometer signals or the like or is part of an ABS system, transmission system, speedometer system or the like.

15. Method according to one of the preceding claims, **characterized in that** means (28) for quantitative or qualitative communication to the driver are provided, as to whether or not parking of the vehicle (10) into the parking space (16) is possible.

16. Method according to any one of the preceding claims, **characterized in that** the distance sensor (18) can be operated in different modi, in particular, as a sensor for a parking assistance system in accordance with any one of the preceding claims, and for a parking assistance system to prevent collisions during parking.

17. Parking assistance system for carrying out the method according to at least one of the preceding claims.

18. Vehicle (10) comprising a system in accordance with the preceding claims.

## Revendications

1. Procédé de fonctionnement d'un système d'aide au stationnement pour un véhicule (10), comportant au moins un capteur de distance (18), qui détecte au moins par portions la zone latérale proche du véhicule, et comportant au moins un capteur de déplacement (22), qui détecte le trajet parcouru par le véhicule, la longueur et/ou la largeur de la place de stationnement (16) étant déterminées à partir des valeurs mesurées par les capteurs (18, 20) pendant le passage le long d'une place de stationnement (16), **caractérisé en ce que**, en fonction de la vitesse (v) du véhicule (10) pendant le passage le long de la place de stationnement (16), la mesure est effectuée au moyen du capteur de distance (18) dans des intervalles de temps différents.

2. Procédé selon la revendication 1, **caractérisé en ce que** la longueur et/ou la largeur mesurées de la place de stationnement (16) sont corrigées par une valeur de correction (k).

3. Procédé selon la revendication 2, **caractérisé en ce que** la valeur de correction (k), en particulier avec des lobes de rayonnement non cylindriques, dépend de la distance latérale du véhicule (10) par rapport aux objets (12, 14) délimitant la place de stationnement (16).

4. Procédé selon la revendication 2 ou 3, **caractérisé en ce que** la valeur de correction (k) dépend de la géométrie du lobe de rayonnement (20) du capteur de distance (18).

5. Procédé selon la revendication 2, 3 ou 4, **caractérisé en ce que** la valeur de correction (k) dépend linéairement de la distance radiale (d₁, d₂) entre la direction de rayonnement principale (38) et la surface du lobe de rayonnement (20) au point de sortie et d'entrée (t₁, t₂) d'un objet (12,14) délimitant la place de stationnement (16) hors du ou dans le lobe de rayonnement (20) du capteur de distance (18).

6. Procédé selon l'une quelconque des revendications 2 à 5, **caractérisé en ce que** la valeur de correction (k) possède différentes valeurs fixes dans différents tronçons de distance par rapport aux objets (12, 14) délimitant la place de stationnement (16).

7. Procédé selon l'une quelconque des revendications 2 à 6, **caractérisé en ce que** la valeur de correction (k) est de l'ordre de 0,5 m, lorsque la distance latérale entre le véhicule (10) et les objets (12, 14) délimitant la place de stationnement (16) est inférieure à 1 m.

8. Procédé selon l'une quelconque des revendications 2 à 7, **caractérisé en ce que** la valeur de correction (k) est de l'ordre de 0,2 m, lorsque la distance latérale entre le véhicule (10) et les objets (12, 14) délimitant la place de stationnement (16) se situe entre 1 m et 1,2 m.

9. Procédé selon l'une quelconque des revendications 2 à 8, **caractérisé en ce que** la valeur de correction (k) est égale à zéro, lorsque la distance latérale entre le véhicule (10) et les objets (12, 14) délimitant la place de stationnement (16) est supérieure à 1,2 m.

10. Procédé selon l'une quelconque des revendications précédentes, **caractérisé en ce que** la mesure au moyen du capteur de distance (18) est effectuée dans des intervalles de temps de 20 ms lorsque la vitesse (v) du véhicule (10) est supérieure à 19 km/h.

11. Procédé selon l'une quelconque des revendications précédentes, **caractérisé en ce que** la mesure au moyen du capteur de distance (18) est effectuée dans des intervalles de temps de 40 ms lorsque la vitesse (v) du véhicule (10) se situe entre 10 km/h et 19 km/h.

12. Procédé selon l'une quelconque des revendications précédentes, **caractérisé en ce que** la mesure au moyen du capteur de distance (18) est effectuée dans des intervalles de temps de 100 ms lorsque la vitesse (v) du véhicule (10) est inférieure à 10 km/h.

13. Procédé selon l'une quelconque des revendications précédentes, **caractérisé en ce que** le capteur de distance (18) est un capteur à ultrasons, un capteur infrarouge, un capteur radar, un capteur optique ou similaire.

14. Procédé selon l'une quelconque des revendications précédentes, **caractérisé en ce que** le capteur de déplacement (22) reçoit des paramètres d'entrée sous forme de signaux ABS, de signaux de transmission, de signaux du tachymètre ou similaires, ou est une partie d'un système ABS, d'un système de transmission, d'un système de tachymètre ou autre système similaire.

15. Procédé selon l'une quelconque des revendications précédentes, **caractérisé en ce qu'**il est prévu des moyens (28) destinés à communiquer au conducteur du véhicule une information quantitative ou qualitative sur la possibilité de garer ou non le véhicule (10) dans la place de stationnement (16).

16. Procédé selon l'une quelconque des revendications précédentes, **caractérisé en ce que** le capteur de distance (18) peut fonctionner dans différents modes, en particulier sous forme de capteur pour un système d'aide au stationnement selon l'une quelconque des revendications précédentes et pour un système d'aide au stationnement destiné à éviter les collisions pendant le processus de stationnement.

17. Système d'aide au stationnement destiné à la mise en oeuvre du procédé selon au moins l'une quelconque des revendications précédentes.

18. Véhicule (10) comportant un système selon l'une quelconque des revendications précédentes.
